# EUROPEAN PATENT SPECIFICATION

(11) **EP 2 742 233 B1**
(45) Date of publication and mention of the grant of the patent: **30.09.2015**
(21) Application number: 12742905.8
(22) Date of filing: 01.08.2012
(51) Int. Cl.: F03D 1/06

(54) **WIND TURBINE BLADE COMPRISING A VORTEX-GENERATOR**
WINDTURBINENSCHAUFEL MIT EINEM WIRBELGENERATOR
PALE DE TURBINE ÉOLIENNE DOTÉE D'UN GÉNÉRATEUR DE TOURBILLON

(30) Priority: 28.10.2011 US 201113283884
(43) Date of publication of application: 18.06.2014
(73) Proprietor: Siemens Aktiengesellschaft, 80333 München (DE)
(72) Inventor: KRISTENSEN, Jens Jørgen Østergaard, DK-9240 Nibe (DK); LAMBORN, Chad, Donnellson, Iowa 52625 (US); TANGAGER, Kim, DK-9560 Hadsund (DK); THRUE, Carsten, DK-8740 Braedstrup (DK)
(86) International application number: PCT/EP2012/065068
(87) International publication number: WO 2013/060493

(56) References cited:
- WO-A1-01/98653
- WO-A2-2008/113350
- US-A1- 2004 129 838

## Description

The invention relates to a blade of a wind turbine, which comprises a vortex generator.

It is known to use shaped devices to generate beneficial vortexes asides a wind turbine blade. These devices are known as "vortex generators".

The vortexes are used to influence the air flow along the surface of the wind turbine blade. For example the vortex generators are used to counteract the stall of air along the blade. Thus the rotational movement of the blade is improved by the generators.

WO 0015961 A1 discloses a wind turbine blade, which is provided with a plurality of vortex generators. They project from the lee surface of the blade and are used to control a so called "boundary layer separation".

WO 2008113350 discloses an advantageous design of a wind turbine blade. The blade shows one or more parallel rows of subboundary layer vortex generators. The resulting blade is resistant to stall and a high maximum lift coefficient is obtained for the resulting blade.

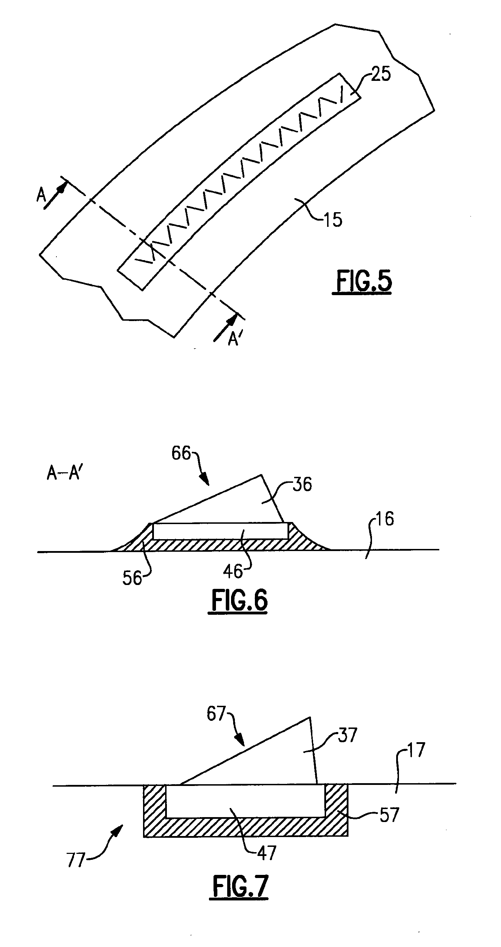

FIG 5 shows a blade 15 which comprises a row of vortex generators 25. For the section A-A' reference is made to FIG 6.

It is known to attach the row of vortex generators 25 to the blade 15 for example by glue.
This situation is even shown in FIG 6. The vortex generator 66 contains a platform (or basement or basis) 46 and an extension part 36, which might be formed like a fin for example.

The vortex generator 66 is connected with the wind turbine blade 16 by a glued connection 56, while the glue is applied between the surface of the blade 16 and the platform 46. The extension part 36 extends from the glued connection 56 and from the blade 16 and is also responsible for the generation of vortexes.

Due to the requested lifetime of more than twenty years for offshore-wind turbines it might be a problem to ensure a long-lasting connection by the glue, which is applied i.e. between the surface of the blade and the vortex generator.

FIG 7 shows another connection between the surface of a blade 17 and a vortex generator 67.

The vortex generator 67 comprises a platform 47 and an extension-part 37, which is preferably formed or shaped like a fin. The extension-part 37 extends into the air flow and thus is the main aerodynamic characteristic part.

The platform 47 is used as basement or base for the extension-part 37.

The platform 47 of the vortex generator 67 is arranged within a recess 77. The recess 77 is an integrated part of the blade 17.

The recess 77 might be formed or shaped into the blade 17 while the blade 17 is manufactured.

It is also possible to mill the recess 77 into the surface of the blade 17 later, i.e. when the blade-manufacturing process is finished. Thus the recess 77 might be milled into a finished blade-surface at a wind turbine site for example. Thus already mounted wind turbine blades can be retrofitted easily if needed.

A connection 57 is provided to fix the platform 47 into the recess 77. The connection might be done by using adhesive, glue, silicone or even a double sided adhesive-tape.

It is intended to influence the aerodynamic properties of the blade by the extension-part.

But the aerodynamic properties of the blade-solutions shown above are even influenced by the height of the platform. At least a part of the platform may extend over the blade surface due to manufacturing-tolerances and/or due to platformtolerances.

The aerodynamic properties of the blade-solutions shown above are even influenced by the amount of adhesive, which is applied into the recess. If the amount of adhesive is too much, the platform even might extend over the blade surface and thus might even contribute to the blade-characteristics.

Thus careful and time-expensive work needs to be done by experienced workers to fix vortex generators at or into a blade as described above.
Thus the resulting blade-vortex-generator-arrangement and even the fixation method are quite expensive in time and in costs, too.

It is therefore the aim of the invention to provide an improved blade of a wind turbine, which comprises a vortex-generator, and even to provide an improved method to manufacture the blade.

This aim is reached by the features of the independent claims.

Preferred configurations of the invention are addressed in the dependent claims.

According to the invention the blade of the wind turbine comprises at least one vortex-generator.
The vortex generator is constructed and arranged at the blade in a way that it contributes to the aerodynamic characteristics of the blade.

The blade contains a recess, which is constructed and arranged to receive at least a part of the vortex-generator. The vortex generator is fixed in the recess.

The recess is at least partly arranged and at least partly embedded in a layer of paint of the blade-surface. The recess is established by a former plate, which is arranged on the surface of the blade before the blade-surface is painted and while the recess is established by removing the former plate after the painting is finished.

Thus the recess is established by using the painting process of the blade-surface. The former plate is shaped as counterpart or as negative mould of the shape of a desired recess. The former plate is removed after the layer of paint has dried. Thus after the removal of the former plate a recess is built in the layer of paint as positive mould.

Accordingly the former plate is positioned on the surface of the blade before the surface of the blade is painted. It is positioned at a blade-surface-position, where a vortex-generator is desired to be afterwards.

It has to be noted that at least one layer of paint is brought on the surface of the blade to establish the recess as described. In a preferred configuration at least one additional layer of filler material is brought on the blade-surface, too.

Thus the combined layers are used to embed the former plate and thus the vortex-generator - in a complete embedding manner or even in a partly embedding manner.

The use of the combined filler-and-painting-layers allows a stable positioning and embedding of the vortex generator.

The use of the combined layers even allows retrofitting of already existing blades. In this case a filler-layer is brought to relevant parts of the blade-surface - and together with the former plate according to the invention as described above. One or more layers of paint are sprayed on the filler and or the remaining blade-surface, too. At least the former plate is removed out of the stacked layers of filler and paint and the recess is established.

In a preferred configuration the recess is established when the main blade-manufacturing process of the blade is completed. The recess is arranged and embedded into layers of paint and/or filler.
The blade may be manufactured by help of a so called "vacuum assisted resin transfer molding, VARTM"-method. The VARTM method is used to cast a single blade. The method is described in more detail in document EP 1 310 351 A1 for example. The former plate is established on the casted blade composite structure accordingly.

In a preferred configuration a strip or even a number of stacked strips of adhesive tape is/are used as former plate.

The vortex-generator preferably comprises a platform and an extension-part, while the platform is fixed at least partly within the recess.

The extension part is arranged into the windflow, which is directed along the surface of the blade. Thus the extension part contributes to the aerodynamic characteristics of the blade.

In a preferred configuration the recess is formed into the surface of the blade as part of the final blade-manufacturing-painting-process. The vortex-generator itself is adjusted, arranged and positioned later at a site of a wind turbine for example.

In a preferred configuration a number of vortex-generators are summarized and shaped to result in a so called vortex-generator-carrier-unit.

The carrier-unit might be formed as a strip or as a sheet of metal or as a sheet of plastic or the like, thus the whole carrier-unit is made of the same material by help of a casting method or by help of a cupping-method or by help of a thermoforming method. The vortex-generator-carrier-unit is connected according to the invention as described above.

In a preferred configuration an additional layer of paint is used to protect the vortex-generator and the blade-surface from ambient influences like salt, ice and dirt.

The invention allows an adjustment of a wind turbine blade with vortex-generators in a cheap and reliable way. The recess is established easy and cost-effective. The whole process does not require specialized machinery, only a type of former plate or edit format is needed.

There is even no need for further steps within the blade-production process as the recess-making-process is part of the (often obligatory) blade-painting-process.

Unwanted contributions of tolerances to aerodynamic properties of the blade (as described above) are reduced. It is possible in a easy way to adjust the thickness of paint by layers by well known and introduced methods.
Thus the depth of the recess can be achieved quite easy and in a predictable manner, even in view to needed tolerances.

The vortex-generator-carrier-unit, which is shaped like a strip, increases the total adhered surface between the blade and the strip. Thus the strip is attached to the blade in a secure manner.

The vortex-generator-carrier-unit, which is shaped like a strip, allows a quite accurate positioning of the summarized vortex-generators.

The invention allows the replacement of damaged vortex-generators. The recess is quite stable and thus can be used several times.

The invention is shown in more detail by help of some figures.

The figures show preferred configurations and thus do not limit the scope of the invention.
- FIG 1-4: show in method steps, how the recess is prepared according to the invention and how vortex-generators are fixed therein,
- FIG 5: shows a prior-art blade with a row of vortex generators as described in the introduction of this application,
- FIG 6: shows a row of vortex generators in reference to FIG 6, and
- FIG 7: shows a known fixation of a vortex-generator, which is positioned at a blade.

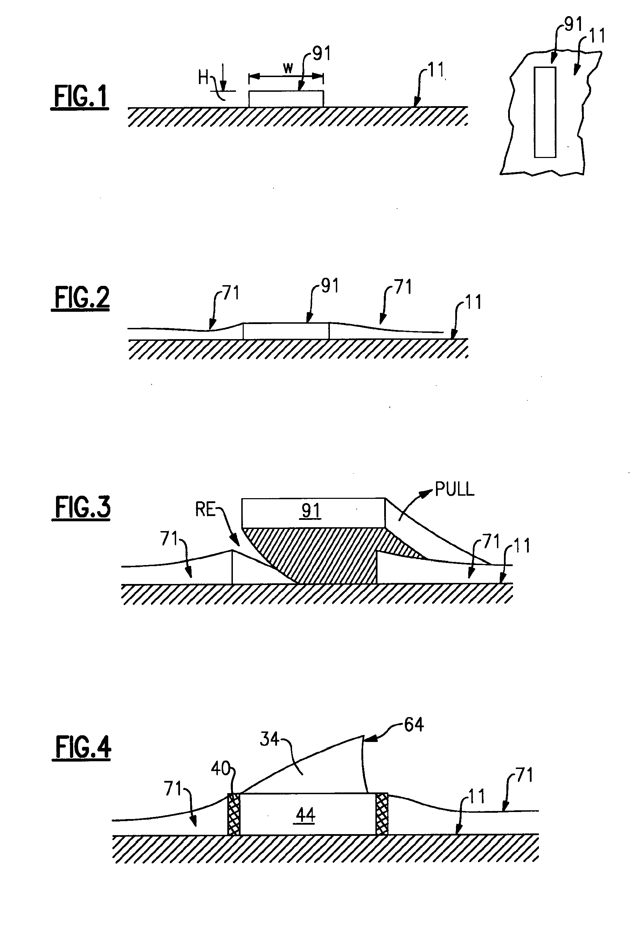

FIG 1 - FIG 4 show in method steps, how the recess is prepared according to the invention and how vortex-generators are fixed therein finally.

FIG 1 shows the side view and the top view of a blade 11. A former plate 91 is placed on top of the surface of the blade 11.

In this preferred configuration an adhesive tape 91 is used as former plate 91. The height H and the width W of the adhesive tape 91 corresponds to the dimensions of a recess, which is needed to fix a vortex generator there. This is shown later in FIG 4.

FIG 2 shows paint 71, which is applied in different layers to the surface of the blade 11.

In a preferred configuration a heating arrangement (i.e. an air-fan) is used to accelerate the curing of the painting 71.

FIG 3 shows the removal of the adhesive tape 91. It is simply pulled away after the painting 71 was cured enough to allow this action without damages of the painting 71.

The adhesive tape 91 is pulled away as indicated by the arrow.

As shown in this simplified three dimensional FIG 3 a recess RE remains at this position, with quite the same width W and height H as the removed adhesive tape 91 (please compare with FIG 1).

FIG 4 now shows the final steps of the method invented - a vortex generator 64 is placed in the recess RE, referring to FIG 3.

The vortex generator 64 comprises a platform 44 and an extension-part 34, which is preferably formed or shaped like a fin. The extension-part 34 extends into the air flow and thus is the main aerodynamic characteristic part.

The platform 44 is used as basement or base for the extension-part 34. The platform 44 of the vortex generator 64 is arranged within the recess RE.

In a preferred configuration the platform 44 is fixed with the surface of the blade 11 by an adhesive or by silicone or even by using a double sided adhesive-tape there.

Gaps between the vortex-generator 64 and the painting 71 are filled by so called "filler material" 40 if needed.
The resulting surface of the blade is post-machined to obtain a smooth and aerodynamic surface of the blade.

As benefit of these steps the durability of the blade and the attached vortex-generators is increased. Due to the filled gaps there is no possibility for dirt, wind, tear and wear to reach the attachment surfaces of the vortex generator.
Even the adhesive, which is used to fix the vortex generators in the recess, is not eroded.

As shown in FIG 3 the recess RE is shaped like a trench.

Thus in a preferred configuration a number of vortex-generators 64 are summarized to result in a so called vortex-generator-carrier-unit (not shown here in detail).

This carrier-unit shows a joint platform 44, which extends along the recess RE and which is designed to slip in the recess RE.

The joint platform 44 caries a number of extension parts 34.

In another preferred configuration the surface of the platform 44 and the inner surface of the recess RE are shaped in a way that they interact with each other to reach a mechanic connection.
One structural or mechanic configuration might be the well known "dovetail", which is used to connect the platform within the recess.

## Claims

1. Blade of a wind turbine,
- wherein the blade comprises at least one vortex-generator, the vortex-generator is constructed and arranged on the blade in a way that it contributes to the aerodynamic characteristics of the blade,
- wherein the blade contains a recess, which is constructed and arranged to receive at least a part of the vortex-generator,
- wherein the vortex generator is fixed in the recess,
- **characterized in that** the recess is at least partly arranged and at least partly embedded in a layer of paint of the blade-surface,
- and the recess is established by a former plate, which is arranged on the surface of the blade before the blade-surface is painted and while the recess is established by removing the former plate after the painting is finished.

2. Blade according to claim 1, where the former plate is shaped as counterpart or as negative mould of the recess needed.

3. Blade according to claim 1 or to claim 2, where the former plate is an adhesive tape.

4. Blade according to claim 1,
- where the vortex-generator comprises a platform and an extension-part,
- where the platform is prepared to be fixed at least partly within the recess, and
- where the extension part is prepared to contribute to the aerodynamic characteristics of the blade.

5. Blade according to claim 1,
- where a number of vortex-generators are combined to result in a vortex-generator-carrier-unit,
- where the carrier-unit comprises a joint platform, which is prepared to be fixed in the recess, and
- where the joint platform carries a number of extension parts, which are prepared to contribute to the aerodynamic characteristics of the blade.

6. Blade according to claim 4 or claim 5, where the platform is connected with the recess and/or is fixed within the recess by a glue, by an adhesive, by a silicone or by a double sided tape, which carries an adhesive.

7. Blade according to claim 4 or claim 5, where the platform is connected with the recess and/or is fixed within the recess by a dovetailed surface-structure.

8. Blade according to claim 1, where the layer of paint, which is used for embedding the recess, contains at least one layer of paint and an additional layer of filler-material.

9. Method to manufacture a wind turbine blade with at least one vortex-generator,
- where the vortex-generator contributes to the aerodynamic characteristics of the blade by its position,
- **characterized in that** the blade comprizes a recess, which is at least partly arranged and which is at least partly embedded in a layer of paint of the blade-surface, is used to fix at least a part of the vortex-generator,
- wherein the recess is established by a former plate, which is arranged on the surface of the blade before the blade-surface is painted and where the recess is established by removing the former plate after the painting is finished.

10. Method according to claim 9, where an adhesive tape is used as forming plate.

11. Method according to claim 8 or claim 9, where at least one layer of paint and an additional layer of filler-material is brought on the surface of the blade, thus the recess is at least partly embedded by those layers.

## Patentansprüche

1. Rotorblatt einer Windenergieanlage,
- wobei das Rotorblatt wenigstens einen Wirbelgenerator umfasst und der Wirbelgenerator auf eine solche Weise konstruiert und auf dem Rotorblatt angeordnet ist, dass er zu den aerodynamischen Eigenschaften des Rotorblattes beiträgt,
- wobei das Rotorblatt eine Vertiefung enthält, welche dafür konstruiert und ausgelegt ist, wenigstens einen Teil des Wirbelgenerators aufzunehmen,
- wobei der Wirbelgenerator in der Vertiefung befestigt ist,
- **dadurch gekennzeichnet, dass** die Vertiefung wenigstens teilweise in einer Farbschicht der Rotorblattoberfläche angeordnet und wenigstens teilweise in dieser eingebettet ist,
- und die Vertiefung durch eine Formgebungsplatte hergestellt wird, welche auf der Oberfläche des Rotorblattes angeordnet wird, bevor die Rotorblattoberfläche lackiert wird, und wobei die Vertiefung hergestellt wird, indem die Formgebungsplatte entfernt wird, nachdem das Lackieren beendet ist.

2. Rotorblatt nach Anspruch 1, wobei die Formgebungsplatte als Gegenstück oder als Negativform der benötigten Vertiefung geformt ist.

3. Rotorblatt nach Anspruch 1 oder nach Anspruch 2, wobei die Formgebungsplatte ein Klebeband ist.

4. Rotorblatt nach Anspruch 1,
- wobei der Wirbelgenerator eine Plattform und einen Verlängerungsteil umfasst,
- wobei die Plattform dafür ausgelegt ist, wenigstens teilweise innerhalb der Vertiefung befestigt zu werden, und
- wobei der Verlängerungsteil dafür ausgelegt ist, zu den aerodynamischen Eigenschaften des Rotorblattes beizutragen.

5. Rotorblatt nach Anspruch 1,
- wobei eine Anzahl von Wirbelgeneratoren kombiniert ist, um eine Wirbelgenerator-Trägereinheit herzustellen,
- wobei die Trägereinheit eine gemeinsame Plattform umfasst, welche dafür ausgelegt ist, in der Vertiefung befestigt zu werden, und
- wobei die gemeinsame Plattform eine Anzahl von Verlängerungsteilen trägt, welche dafür ausgelegt sind, zu den aerodynamischen Eigenschaften des Rotorblattes beizutragen.

6. Rotorblatt nach Anspruch 4 oder Anspruch 5, wobei die Plattform durch einen Leim, durch einen Klebstoff, durch ein Silikon oder durch ein doppelseitiges Band, welches einen Klebstoff trägt, mit der Vertiefung verbunden und/oder innerhalb der Vertiefung befestigt ist.

7. Rotorblatt nach Anspruch 4 oder Anspruch 5, wobei die Plattform durch eine schwalbenschwanzförmige Oberflächenstruktur mit der Vertiefung verbunden und/oder innerhalb der Vertiefung befestigt ist.

8. Rotorblatt nach Anspruch 1, wobei die Farbschicht, welche zum Einbetten der Vertiefung verwendet wird, wenigstens eine Schicht Farbe und eine zusätzliche Schicht Füllmaterial enthält.

9. Verfahren zum Herstellen eines Windenergieanlagen-Rotorblattes mit wenigstens einem Wirbelgenerator,
- wobei der Wirbelgenerator durch seine Position zu den aerodynamischen Eigenschaften des Rotorblattes beiträgt,
- **dadurch gekennzeichnet, dass** das Rotorblatt eine Vertiefung umfasst, welche wenigstens teilweise in einer Farbschicht der Rotorblattoberfläche angeordnet ist und welche wenigstens teilweise in dieser eingebettet ist und verwendet wird, um wenigstens einen Teil des Wirbelgenerators zu befestigen,
- wobei die Vertiefung durch eine Formgebungsplatte hergestellt wird, welche auf der Oberfläche des Rotorblattes angeordnet wird, bevor die Rotorblattoberfläche lackiert wird, und wobei die Vertiefung hergestellt wird, indem die Formgebungsplatte entfernt wird, nachdem das Lackieren beendet ist.

10. Verfahren nach Anspruch 9, wobei ein Klebeband als Formgebungsplatte verwendet wird.

11. Verfahren nach Anspruch 8 oder Anspruch 9, wobei wenigstens eine Schicht Farbe und eine zusätzliche Schicht Füllmaterial auf die Oberfläche des Rotorblattes aufgebracht werden und somit die Vertiefung wenigstens teilweise von diesen Schichten eingebettet wird.

## Revendications

1. Pale d'une éolienne,
- dans laquelle la pale comprend au moins un générateur de tourbillon, le générateur de tourbillon est construit et agencé sur la pale de telle manière qu'il contribue aux caractéristiques aérodynamiques de la pale,
- dans laquelle la pale contient un évidement, qui est construit et agencé pour recevoir au moins une partie du générateur de tourbillon,
- dans laquelle le générateur de tourbillon est fixé dans l'évidement,
- **caractérisée en ce que** l'évidement est au moins partiellement agencé et au moins partiellement intégré dans une couche de peinture de la surface de pale,
- et l'évidement est établi par une plaque de forme, qui est agencée sur la surface de la pale avant que la surface de pale ne soit peinte et alors que l'évidement est établi en enlevant la plaque de forme lorsque la peinture est terminée.

2. Pale selon la revendication 1, où la plaque de forme est formée comme une contrepartie ou comme un moule négatif de l'évidement nécessaire.

3. Pale selon la revendication 1 ou la revendication 2, où la plaque de forme est un ruban adhésif.

4. Pale selon la revendication 1,
- où le générateur de tourbillon comprend une plate-forme et une partie d'extension,
- où la plate-forme est préparée pour être fixée au moins partiellement à l'intérieur de l'évidement, et
- où la partie d'extension est préparée pour contribuer aux caractéristiques aérodynamiques de la pale.

5. Pale selon la revendication 1,
- où un certain nombre de générateurs de tourbillon sont combinés pour résulter en une unité de support de générateurs de tourbillon,
- où l'unité de support comprend une plate-forme conjointe, qui est préparée pour être fixée dans l'évidement, et
- où la plate-forme conjointe supporte un certain nombre de parties d'extension, qui sont préparées pour contribuer aux caractéristiques aérodynamiques de la pale.

6. Pale selon la revendication 4 ou la revendication 5, où la plate-forme est connectée avec l'évidement et/ou est fixée à l'intérieur de l'évidement par une colle, par un adhésif, par un silicone ou par un ruban double face, qui supporte un adhésif.

7. Pale selon la revendication 4 ou la revendication 5, où la plate-forme est connectée avec l'évidement et/ou est fixée à l'intérieur de l'évidement par une structure de surface en queue d'aronde.

8. Pale selon la revendication 1, où la couche de peinture, qui est utilisée pour intégrer l'évidement, contient au moins une couche de peinture et une couche additionnelle de matière de remplissage.

9. Procédé de fabrication d'une pale d'éolienne avec au moins un générateur de tourbillon,
- où le générateur de tourbillon contribue aux caractéristiques aérodynamiques de la pale par sa position,
- **caractérisé en ce que** la pale comprend un évidement, qui est au moins partiellement agencé et qui est au moins partiellement intégré dans une couche de peinture de la surface de pale, est utilisé pour fixer au moins une partie du générateur de tourbillon,
- dans lequel l'évidement est établi par une plaque de forme, qui est agencée sur la surface de la pale avant que la surface de pale ne soit peinte et où l'évidement est établi en enlevant la plaque de forme lorsque la peinture est terminée.

10. Procédé selon la revendication 9, où un ruban adhésif est utilisé comme plaque de forme.

11. Procédé selon la revendication 8 ou la revendication 9, où au moins une couche de peinture et une couche additionnelle de matière de remplissage sont apportées sur la surface de la pale, ainsi l'évidement est au moins partiellement intégré par ces couches.
